# EUROPEAN PATENT APPLICATION

(11) **EP 4 272 562 A1**
(43) Date of publication of application: **08.11.2023**
(21) Application number: 22172177.2
(22) Date of filing: 06.05.2022
(51) Int. Cl.: A22C 11/02

(54) **MAGAZINE WITH CONVEYOR TO PROVIDE PACKAGING CASING FOR PRODUCING SAUSAGE-SHAPED PRODUCTS**

(71) Applicant: Poly-clip System GmbH & Co. KG, 65795 Hattersheim (DE)
(72) Inventor: MEYRAHN, Joachim, 64390 Erzhausen (DE); MÜNKER, Udo, 63505 Langenselbold (DE)
(74) Representative: Eisenführ Speiser

(57) **Abstract**

A magazine (18) for providing at least one tubular-shaped packaging casing (14) suitable for receiving a flowable filling material in the production of sausage-shaped products, in particular sausages, comprising: at least one mandrel (26) for holding at least one packaging casing (14), wherein the at least one mandrel (26) has a longitudinal mandrel axis (27), and wherein the at least one mandrel (26) comprises a free end (32) at a first mandrel end (30), and a conveyor (90) for holding at least one mandrel (26) in an upright position, wherein the conveyor (90) conveys the at least one mandrel (26) from a loading position to a delivery position.

## Description

The present invention relates to a magazine with a conveyor for providing at least one tubular-shaped packaging casing suitable for receiving a flowable filling material in the production of sausage-shaped products, in particular sausages, and a production machine for filling and closing a tubular or bag-shaped packaging casing, in particular a clipping machine.

In practice, it is known that, for example in the production of sausage-shaped products, in particular sausages, filling material is fed by a filling unit through a filling tube into a tubular or bag-shaped packaging casing. A filling unit or filling machine provides and conveys the filling material. The packaging casing can be stored on said filling tube and can be closed at its front end and its back end by at least one closure clip each as a closure means e.g., by a clipping machine and/or clipping device of a clipping machine. The tubular-shaped packaging casing is pulled-off from the filling tube while being filled by the feeding pressure.

The tubular-shaped packaging casing is made of a thin sheet material and is stored on the filling tube in a shirred form. Thus, a long sausage-shaped product can be produced, wherein the packaging casing takes up a little space on the filling tube. But the packaging casing has a limited length, so a new packaging casing must be provided at regular time intervals. Further, different packaging casings must be provided depending on the sausage-shaped product, wherein a coarse or thick sausage requires large packaging casings, and a delicate or thin sausage requires small packaging casings. It is known to provide a plurality of packaging casings in a storage nearby a production system for producing a sausage-shaped product, wherein an operator manually and very carefully picks up each packaging casing and pushes over the filling tube. The packaging casing is difficult to handle due to its mechanical properties and the way it is stored in the storage.

Since clipping machines can have high cycle rates, it may be necessary for an operator to be constantly in front of the clipping machine to push new packaging casings onto the filling tube. Despite the high level of automation of a filling/clipping machine combination, this approach does not help to make the production process efficient. In addition, the operator's activity is monotonous and is thus physically and mentally stressful.

Thus, it is an object of the present invention to create a possibility that the production process is efficient and the burden for an operator is reduced.

According to the present invention, there is provided an inventive magazine for providing at least one tubular-shaped packaging casing suitable for receiving a flowable filling material in the production of sausage-shaped products, in particular sausages, comprising: at least one mandrel or rod or bar for holding at least one packaging casing, wherein the at least one mandrel has a longitudinal mandrel axis, and wherein the at least one mandrel comprises a free end at a first mandrel end, and a conveyor for holding at least one mandrel in an upright position, wherein the conveyor conveys the at least one mandrel from a loading position to a delivery position. The at least one mandrel or rod or bar may be a tubular shaft or a solid bar. The at least one packaging casing may be removed from the at least one mandrel by a relative movement regarding the mandrel axis over the free end of the at least on mandrel. The tubular-shaped packaging casing is folded like a concertina and is provided at its end facing in the direction of the free end of the mandrel with at least one closure means, like a closure clip.

Due to the consistent storage of the packaging casing, the process of removal can be automated, in particular with a picking robot or rather a six-axis robot or articulated arm robot. It is conceivable that, alternatively, the at least one mandrel is provided for holding at least one carrying tube along with at least one packaging casing stored on the carrying tube. In the further description, reference is made only to the packaging casing, whereas the contents may also apply to the embodiment as to the carrying tubes each carrying one tubular-shaped packaging casing.

In some embodiments, the magazine further comprises at least one retaining element arranged at least at the proximity of the first mandrel end for releasably retaining the packaging casing on the at least one mandrel.

Preferably, the at least one retaining element has at least one first section or position in which it releases the free end of the at least one mandrel for allowing a removal of a packaging casing and at least one second section or position in which the free end of the at least one mandrel is capped by the at least one retaining element for holding a packaging casing stored on the at least one mandrel in its position on the mandrel. The at least one first section or position may be in extension of the mandrel axis at the free end of the at least one packaging casing and/or at least one mandrel. In the at least one first section or position the at least one retaining element may at least partially cover the free face end of the at least one packaging casing and/or the at least one mandrel, preferably half covered or covered by one third. Additionally or alternatively, the at least one first section or position may be at a circumference of the at least one packaging casing or the at least one mandrel. The at least one second section or position may be spaced apart from the first section or position along the mandrel axis.

In some embodiments, the at least one retaining element is made of a material which is elastic or flexible at least in sections, preferably the at least one retaining element comprises a rigid fastening portion and a flexible lip. Thus, the at least one retaining element may be reversibly movable between the first section or position and the second section or position.

The at least one retaining element may be configured in such a way, that the retaining element urges by its own in the first section or position and must be moved in the second section or position using external energy or vice versa.

The at least one retaining element may comprise a material that is suitable for a plurality of reversible deformations, like rubber or elastomers.

It is advantageous if the at least one retaining element comprises a retaining surface, wherein in the first section or position the retaining surface extends perpendicular to the mandrel axis and engages, preferably completely, with the free end of the at least one mandrel and/or an end face of the packaging casing. In the second section or position, the retaining surface may further be perpendicular to the mandrel axis or may be curved around an axis perpendicular to the mandrel axis to release the at least one packaging casing. Alternatively, the at least one retaining element may be translationally moved perpendicular to the mandrel axis between the first section or position and the second section or position.

In a preferred embodiment of the inventive magazine, the longitudinal mandrel axis is oriented at least approximately vertically or forms an acute angle with the vertical line. The magazine including the mandrel and the conveyor may be arranged at the top of a table. Vertical means perpendicular to the hall floor on which the magazine or the table may be installed and/or in the direction of the earth's gravity. Thus, a packaging casing that is stored rests radially evenly on the mandrel. A horizontal arrangement can cause an irregular, one-sided arrangement of the packaging casing on the filling tube due to the earth's gravity, by which the packaging casing could be damaged or difficult to pick up.

In some embodiments, the conveyor is a circulating conveyor belt driven by a motor, wherein the conveyor belt is preferably arranged in an oval configuration.

Preferably, the at least one mandrel has a second mandrel end spaced apart from the first mandrel end along the longitudinal mandrel axis and is attached to a respective mandrel carrier means positioned on the conveyer. The mandrel is releasably or non-releasably attached to the mandrel carrier means at the second mandrel end.

In a preferred embodiment of the inventive magazine, the at least one mandrel comprises at least one support element for supporting the packaging casing, the at least one support element is preferably reversibly adjustable in its position along the mandrel. The packaging casing may rest against the at least one support element due to earth's gravity. The at least one mandrel may comprise a mandrel rod. The at least one support element may be arranged at the mandrel rod. The at least one support element may be formed as a mandrel collar, wherein the mandrel collar has a larger cross-section than the mandrel rod regarding the mandrel axis.

The at least one support element is preferably reversibly adjustable in its position along the mandrel, in particular along the mandrel rod. Thus, packaging casings with different lengths may be stored in the magazine. To adjust the position of the at least one support element along the mandrel axis, the at least one mandrel may comprise a rack and a gear wheel engaging with the rack or a threaded spindle and a nut engaging with the threaded spindle.

In some embodiments, the conveyor is inclined in its longitudinal axis. This simplifies picking up the packaging casing from the mandrel.

Preferably, the at least one retaining element is held by holding means coupled by a shaft to the mandrel carrier means for supporting the holding means and transmitting forces from the mandrel carrier means to the holding means, in particular a rotation around the conveyor. The holding means may be arranged above the mandrel carrier means and/or the shaft may be arranged between the mandrel carrier means and the holding means.

Additionally, the at least one mandrel may also be adjustable in the axial length according to the mandrel axis. Thus, packaging casings with different lengths may be stored in the magazine.

It is advantageous if the at least one retaining element is arranged at the outer circumference of the holding means. Thus, the holding means stand back and just the at least one retaining element is protruding perpendicular to the mandrel axis to cap the packing casing stored on the at least one mandrel.

Preferably, the holding means comprise at least one tooth extending perpendicular to the mandrel axis and the at least one retaining element is arranged at the at least one tooth.

In some embodiments, the carrier means are holding the mandrel, the shaft and the holding means.

It is advantageous if mandrel carrier means have an outer first diameter, and the holding means have an outer second diameter. The first diameter may be larger than the second diameter. Thus, the at least one mandrel may be arranged at the mandrel carrier means while packaging casing can be easily picked from and arranged at the at least one mandrel. The quotient between the first diameter and the second diameter may be in range between 10:1 and 1,2:1, in particular in a range between 5:1 and 1,5:1 and preferably about 2:1. Thus, a movement of a packaging casing along the mandrel axis over the free end of the at least one mandrel can be realized.

The present invention further relates to a production system, in particular a clipping machine, for filling and closing a tubular or bag-shaped packaging casing to produce sausage-shaped products, in particular sausages, comprising: at least one magazine according to the present invention, and a robot to pick-up a packaging casing provided at the magazine and to place it at a filling unit.

In some embodiments, the loading position and the delivery position of the conveyor is separated by a separating wall, wherein the separating wall includes at least one window for passing the conveyor including the at least one mandrel.

The separating wall may also include two or more windows each bridging the conveyor.

Preferably, the separating wall includes at least one sensor, in particular a light barrier, to monitor the at least one window of the separating wall for unexpected movements such as a hand of an operator.

In some embodiments, the at least one sensor is switched off while a mandrel is passing the window of the separating wall. Due to this, it is possible to enhance safety of an operator.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" or "including" does not exclude other elements or steps. The word "a" or "an" does not exclude the plurality. The wording "at least one" items comprising also the number 1, i.e. a single item, and further numbers like 2, 3, 4 and so forth. The word "about" includes a deviation of ± 5% of the total.

According to the present invention, there is further disclosed a filling tube assembly of a clipping machine for producing sausage-shaped products, like sausages, by filling a filling material into a tubular packaging casing, the filling tube assembly comprising: a revolver plate, which is rotatable about a rotation axis, at least a first filling tube and a second filling tube, each having a central axis, wherein the filling tubes are mounted on the revolver plate, at least a first casing brake assembly and a second casing brake assembly, wherein the first casing brake assembly is connected to the first filling tube and the second casing brake assembly is connected to the second filling tube, and a drive device for rotating the revolver plate including the filling tubes about the rotation axis, wherein the central axis of the first filling tube and the central axis of the second filling tube define an angle larger than 0°, preferably between 15° and 75°, and more preferably between 30° and 60°.

Preferably, the first casing brake assembly is associated with the first filling tube and includes a first casing brake unit positioned in the region of a first end of the first filling tube, and is pivotally coupled to the revolver plate by a first telescopic casing brake holder unit, and the second casing brake assembly is associated with the second filling tube and includes a second casing brake unit positioned in the region of a first end of the second filling tube, and is pivotally coupled to the revolver plate by a second telescopic casing brake holder unit.

Preferably, the first casing brake unit is linearly reversibly shiftable along the first filling tube onto its first end and pivoted away from the first end of the first filling tube, and the second casing brake unit is linearly reversibly shiftable along the second filling tube onto its first end and pivoted away from the first end of the second filling tube.

Preferably, the first casing brake holder unit includes a telescopic guidance and a telescopic drive for extending and retracting telescopic guidance, and the second casing brake holder unit includes a telescopic guidance and a telescopic drive for extending and retracting telescopic guidance.

Preferably, the telescopic drives are linear drives, particularly, piston/cylinder drives.

Preferably, the filling tube assembly further comprises a first pivot drive unit, which is provided for pivoting the first casing brake assembly relative to the first filling tube about a pivot point at which the first casing brake assembly is coupled to the revolver plate, and the filling tube assembly further comprises a second pivot drive unit, which is provided for pivoting the second casing brake assembly relative to the second filling tube about a pivot point at which the second casing brake assembly is coupled to the revolver plate.

Preferably, the filling tube assembly is mounted on a framework via a joint portion.

Preferably, the joint portion is mounted on a side wall of the framework.

Preferably, the filling tube assembly is linearly and/or rotatably shiftable such that the filling tube is positioned in front of the clipping machine.

Preferably, a feeding socket is fixed to the revolver plate and facing away from the clipping machine, wherein feeding socket is coaxially aligned with the central axis of the filling tube.

According to the present invention, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly as mentioned above, gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, a discharge device for discharging the sausage-shaped product just produced out of the clipping machine, and a control unit for controlling at least the clipping machine and the robotic device.

Preferably, the robotic device includes: a gripper unit for gripping a tubular packaging casing supply provided by the storage device, and for transferring said tubular packaging casing supply onto the at least first filling tube of the clipping machine; and a control unit for controlling at least the gripper unit.

Preferably, the storage device includes: at least a first storage assembly in which at least one tubular packaging casing supply is provided for being transferred by the robotic device onto the at least first filling tube of the clipping machine.

Preferably, the first filling tube is movable between a filling position, in which filling material is fed through the first filling tube into the tubular packaging casing stored on the first filling tube, and a refill position, in which a tubular packaging casing supply is transferred onto the first filling tube.

According to the present invention, there is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least first filling tube, and transferring by the robotic device a tubular packaging casing supply provided by a storage device onto the at least first filling tube being arranged in the refill position.

According to the present invention, there is further disclosed a gripping device for picking up, conveying and delivering a casing tube such as a casing tube of a sausage, the gripping device comprising: a longitudinal base structure which is attached to a handling device by means of a coupling element, preferably in a non-destructively detachable manner, at least two gripper members having each at least one bottom surface and at least one top surface, wherein the gripper members of the gripping device are provided with gripping surfaces, at least two drive means, which are attached to the axial ends of the base structure, for reversibly moving the gripper members between a first position in which the gripper members are positioned on opposite sides of the casing tube to be picked up, and a second position in which the gripper members seize the casing tube to be picked up, and a control unit for simultaneously driving the drive means of the gripper members.

Preferably, the drive means are driven pneumatically, and wherein the drive means are supplied by means of a compressed air supply via a common valve and respective conduits.

Preferably, the conduits from the common valve to the respective drive means are substantially of the same length.

Preferably, a respective flow restrictor is connected to the drive means for compensating unsynchronized movements during opening and closing of the gripper members by the drive means.

Preferably, at least one of the gripper members is translatory and/or rotatory movable with respect to the base structure.

Preferably, each of the gripper members is guided by at least two guide rods.

Preferably, at least one of the gripper members comprises a detection means which is capable of detecting the contact of the casing tube, wherein preferably two opposing gripper members comprise each a detection means.

Preferably, the drive means are connected to the gripper members via at least one connecting bracket having preferably a curved shape.

Preferably, the base structure and/or the at least two gripper members comprise a plurality of through holes and oblong holes for reducing the weight of the gripping device.

According to the present invention, there is further disclosed a system for picking up, conveying and delivering a casing tube such as a casing tube of a sausage, the system comprising: a delivering bar on which the respective casing tube is stored, a receiving bar on which the respective casing tube is to be inserted, and a transporting apparatus including a handling device and a gripping device as mentioned above for conveying the casing tube from the delivering bar on the receiving bar.

Preferably, the system further comprises at least one magazine including a plurality of delivering bars, wherein the at least one magazine is mounted on a framework, wherein preferably two magazines are arranged on the framework opposite to each other.

Preferably, the framework is rotatable and configured to rotate the at least one magazine in a picking up position and a loading position, respectively.

Preferably, the at least one magazine comprises a plurality of substantially vertical delivering bars, wherein preferably the delivering bars are arranged in a circle with a predefined distance to each other.

Preferably, the at least one magazine is rotatable and configured to rotate one of the delivering bars in the picking up position.

Preferably, the gripping device of the transporting apparatus is configured to pick up a casing tube from the delivering bar and to deliver said casing tube on the receiving bar which is a filling tube of a clipping machine.

Preferably, the transporting apparatus is attached to the clipping machine, preferably on a back plate of the clipping machine or on a top plate of the clipping machine.

According to the present invention, there is further disclosed a magazine for providing at least one tubular-shaped packaging casing suitable for receiving a flowable filling material in the production of sausage-shaped products, in particular sausages, comprising: a longitudinal magazine axis, at least one mandrel for holding at least one packaging casing, wherein the at least one mandrel has a longitudinal mandrel axis, which extends at least approximately parallel to the longitudinal magazine axis, and wherein the at least one mandrel comprises a free end at a first mandrel end, and at least one retaining element arranged at least at the proximity of the first mandrel end for releasably retaining the packaging casing on the at least one mandrel.

Preferably, the longitudinal magazine axis is oriented at least approximately vertically.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the at least one mandrel has a second mandrel end spaced apart from the first mandrel end along the longitudinal mandrel axis and is attached to mandrel carrier means.

Preferably, the mandrel carrier means are rotatable around the longitudinal magazine axis.

Preferably, the at least one retaining element is held by holding means coupled by a shaft to the mandrel carrier means for supporting the holding means and transmitting forces from the mandrel carrier means to the holding means.

Preferably, the mandrel carrier means have a first diameter and the holding means have a second diameter, and wherein the first diameter is greater than the second diameter.

Preferably, the at least one mandrel is arranged at the mandrel carrier means along a circular ring that is perpendicular to the magazine axis.

Preferably, the circular ring has a ring diameter, and the first diameter is greater than the ring diameter and/or the ring diameter is larger than the second diameter.

Preferably, the at least one mandrel comprises at least one support element for supporting the packaging casing, the at least one support element is preferably reversibly adjustable in its position along the mandrel.

According to the present invention, there is further disclosed a revolver comprising at least two magazines as mentioned above, wherein the at least two magazines are arranged on revolver carrier means, which are rotatable around a revolver axis extending at least approximately parallel to the longitudinal magazine axis.

Preferably, the revolver carrier means have at least a first position in which one magazine is arranged in a delivery position and at least a second position in which the further magazine is arranged in a feeding position.

Preferably, comprising at least one separating wall for separating the first position from the second position.

According to the present invention, there is further disclosed a production machine, in particular a clipping machine, for filling and closing a tubular or bag-shaped packaging casing to produce sausage-shaped products, in particular sausages, comprising: at least one magazine as mentioned above and/or at least one revolver as mentioned above, and a robot to pick-up a packaging casing provided at the magazine and/or at the revolver and to place it at a filling unit.

According to the present invention, there is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided preferably with at least a first filling tube and preferably a second filling tube and a first and preferably a second casing brake assembly, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a first gripper unit for gripping a tubular packaging casing supply and a second gripper unit for gripping the first casing brake assembly, the method comprises the steps of: removing the casing brake assembly from the filling tube by the second gripper unit; moving the robotic device into a take-up position for taking up by the first gripper unit a tubular packaging casing supply provided in a storage device; gripping the tubular packaging casing supply provided in a storage device by the first gripper unit; moving the robotic device from the take-up position toward the filling tube; transferring the tubular packaging casing supply onto the filling tube by the first gripper unit; releasing the tubular packaging casing supply onto the filling tube of the clipping machine by the first gripper unit, and positioning the casing brake assembly on the filling tube by the second gripper unit.

Preferably, the method further comprises the step of exchanging a first gripper unit of robotic device, for gripping a tubular packaging casing supply by a second gripper unit for gripping the at least first casing brake assembly, for reversibly removing the first casing brake assembly from the at least first filling tube.

Preferably, the method further comprises the step of securing the tubular packaging casing supply on the first filling tube by at least one retainer device.

Preferably, the robotic device includes at least a first sensor unit associated with the first gripper unit, for detecting the position of the gripper unit relative to the tubular packaging casing supply in the storage device and/or for detecting the position of the gripper unit relative to the filling tube.

Preferably, the first gripper unit at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the first gripper unit along a predefined moving path towards the filling tube of the clipping machine.

Preferably, the method further comprises the step of positioning the first gripper unit with its gripping axis coaxially to the central axis of the filling tube and in front of the filling tube; and shifting the tubular packaging casing supply onto the filling tube by the first gripper unit.

Preferably, the method further comprises the step of detecting by the first sensor unit the position of the tubular packaging casing supply on the filling tube; and releasing the tubular packaging casing supply onto the filling tube.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material may be fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the first gripper unit includes at least one further sensor unit for detecting the position of the gripper elements.

According to the present invention, there is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least at least a first filling tube and preferably a second filling tube onto each of which a packaging casing supply can be applied; a robotic device for transferring a packaging casing supply from the storage device onto a filling tube of the clipping machine, and having at least a first griper unit for gripping a tubular packaging casing supply, and a second gripper unit for gripping a casing brake assembly of the clipping machine; and a control unit for at least partially controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

According to the present invention, there is further disclosed a robotic device including a gripper unit and arranged in a system for producing sausage-shaped products as mentioned above and controlled by the method as mentioned above.

According to the present invention, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly having at least a first filling tube for feeding the filling material into the tubular packaging casing stored on the filling tube and being closed at its first end, at least a first casing brake assembly, associated with the first filling tube, for applying a braking force to the tubular packaging casing while being pulled-off from the first filling tube, and a control unit for controlling at least the clipping machine, the robotic device includes: at least a first gripper unit for gripping a tubular packaging casing supply provided by the storage device, and for transferring said tubular packaging casing supply onto the at least first filling tube of the clipping machine; and at least a second gripper unit for gripping the at least first casing brake assembly, for reversibly removing the at least first casing brake assembly from the at least first filling tube; and the storage device includes: at least a first storage assembly in which at least one tubular packaging casing supply is provided for being transferred by the robotic device onto the at least first filling tube of the clipping machine.

Preferably, a receiving device is provided for at least temporarily receiving the first and/or the second gripper unit, wherein, preferably, the receiving device is provided at the clipping machine.

Preferably, the receiving device includes at least a first holding unit and a second holding unit for at least temporarily accommodating the first and/or second gripper unit.

Preferably, at least one retainer device is provided for temporarily securing the tubular packaging casing supply on the first filling tube in the refill position.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the first gripper unit relative to the storage device and/or the position of the first gripper unit relative to the first and/or second filling tube arranged in the refill position.

Preferably, the robotic device includes a second sensor unit for determining a gripping force applied to the tubular packaging casing supply by the first gripper unit.

Preferably, the storage device includes at least a third sensor unit for detecting the presence or absence of a tubular packaging casing supply in the storage device.

Preferably, the system further including a hanging line arranged downstream the discharge device, for suspending the sausage-shaped products discharged from the clipping machine by the discharge device onto a rod-like element, like a smoking rod, the hanging line includes a control unit for controlling at least the hanging line, wherein, preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

According to the present invention, there is further disclosed a method for producing sausage-shaped products in a system as mentioned above, the method comprises the steps of: producing a sausage-shaped product by a clipping machine having an at least first filling tube onto which a tubular packaging casing is stored into which filling material is fed, the method further comprises the steps of: moving the at least first filling tube from a filling position, in which filling material is fed into the tubular packaging casing, into a refill position, in which a tubular packaging casing supply is transferred onto the at least first filling tube, removing by the robotic device a first casing brake assembly from the at least first filling tube being in the refill position, and transferring by the robotic device a tubular packaging casing supply provided by a storage device onto the at least first filling tube being arranged in the refill position.

Preferably, the method further comprises the step of positioning by the robotic device the first casing brake assembly onto the at least first filling tube.

Preferably, the method further comprises the step of exchanging a first gripper unit of the robotic device, for gripping a tubular packaging casing supply by a second gripper unit for gripping the at least first casing brake assembly, for reversibly removing the first casing brake assembly from the at least first filling tube.

Preferably, the method further comprises the step of suspending the sausage-shaped product discharged by the discharge device on a rod-like element provided by the hanging line, wherein, preferably, the clipping machine controls at least partially the robotic device and/or the hanging line.

According to the present invention, there is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least two filling tubes, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a gripper unit for gripping a tubular packaging casing supply, the method comprises the steps of: moving the robotic device into a take-up position for taking up by the gripper unit a tubular packaging casing supply provided in a storage device; gripping the tubular packaging casing supply provided in a storage device by the gripper unit; moving the robotic device from the take-up position toward the filling tube; transferring the tubular packaging casing supply onto the filling tube by the gripper unit; and releasing the tubular packaging casing supply onto the filling tube of the clipping machine by the gripper unit.

Preferably, the robotic device includes at least a first sensor unit associated with the gripper unit, for detecting the position of the gripper unit relative to the tubular packaging casing supply in the storage device and/or for detecting the position of the gripper unit relative to the filling tube.

Preferably, the gripper unit includes at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the gripper unit along a predefined moving path towards the filling tube of the clipping machine.

Preferably, the method further comprises the step of position the gripper unit with its gripping axis coaxially to the central axis of the filling tube and in front of the filling tube; and shifting the tubular packaging casing supply onto the filling tube by the gripper unit.

Preferably, the method further comprises the step of detecting by the first sensor unit the position of the tubular packaging casing supply on the filling tube; and releasing the tubular packaging casing supply onto the filling tube.

Preferably, filling tube of the clipping machine is provided with a casing brake assembly, the method further comprises the step of: positioning the casing brake assembly in front of the filling tube after the tubular packaging casing supply has been shifted onto the filling tube and prior the tubular packaging casing supply has been released onto the filling tube by the gripper unit.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material is fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the gripper unit includes at least one further sensor unit for detecting the position of the gripper elements.

According to the present invention, there is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least two filling tubes onto each of which a packaging casing supply can be applied; a robotic device for transferring a packaging casing supply from the storage device onto a filling tube of the clipping machine; and a control unit for controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the first filling tube is provided with a first casing brake unit reversibly removable from the first filling tube and the second filling tube is provided with a second casing brake unit reversibly removable from the second filling tube, and wherein the control unit is configured to release the tubular packaging casing supply fed to the filling tube located in the refilling position when the respective casing brake unit is positioned in front of the filling tube shortly before being pushed onto the latter.

According to the present invention, there is further disclosed a robotic device including a gripper unit and arranged in a system for producing sausage-shaped products as mentioned above and controlled by the method as mentioned above.

According to the present invention, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply, the clipping machine comprises: a filling tube assembly having at least a first filling tube for feeding the filling material into the tubular packaging casing stored on the filling tube and closed at its first end, at least a first casing brake assembly, associated with the first filling tube, for applying a braking force to the tubular packaging casing while being pulled-off from the first filling tube, and a control unit for controlling at least the clipping machine, the robotic device includes: a gripper unit for gripping a tubular packaging casing supply provided by the storage device, and for transferring said tubular packaging casing supply onto the at least first filling tube of the clipping machine; the storage device includes: at least a first storage assembly in which at least one tubular packaging casing supply is provided for being transferred by the robotic device onto the at least first filling tube of the clipping machine.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the gripper unit relative to the storage device and/or the position of the gripper unit relative to the first and/or second filling tube arranged in the refill position.

Preferably, the robotic device includes a second sensor unit for determining a gripping force applied to the tubular packaging casing supply by the gripper unit.

Preferably, the storage device includes at least a third sensor unit for detecting the presence or absence of a tubular packaging casing supply in the storage device.

Preferably, the system further includes a hanging line arranged downstream the discharge device, for suspending the sausage-shaped products discharged from the clipping machine by the discharge device onto a rod-like element, like a smoking rod, the hanging line includes a control unit for controlling at least the hanging line.

Preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

According to the present invention, there is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least fist filling tube, and transferring by the robotic device a tubular packaging casing supply provided by a storage device onto the at least first filling tube being arranged in the refill position.

Preferably, the method further comprises the step of suspending the sausage-shaped product discharged by the discharge device on a rod-like element provided by the hanging line.

Preferably, the method further comprises the step of least partially controlling by the clipping machine the robotic device and/or the hanging line.

Further advantages and preferred embodiments of the present invention will be described in the following together with the drawings listed below. The expressions "left", "right", "below" and "above" used in the following description are referred to the drawings in an alignment such that the reference numbers and the notation of the figures used can be read in normal orientation.

It shall be understood that a preferred embodiment of the present invention can also be any combination of the dependent claims or above embodiments with the respective independent claim.

In the accompanying drawings:
- Fig. 1: shows a perspective front view of a clipping machine comprising a magazine according to the present invention;
- Fig. 2: shows a top view of the clipping machine according to Fig. 1;
- Fig. 3a: shows a schematical side view of a mandrel and a retaining element of the magazine according to Fig. 1, wherein the retaining element is in a retaining position; and
- Fig. 3b: shows a schematical side view of a mandrel and a retaining element of the magazine according to Fig. 1, wherein the retaining element is in a releasing position.

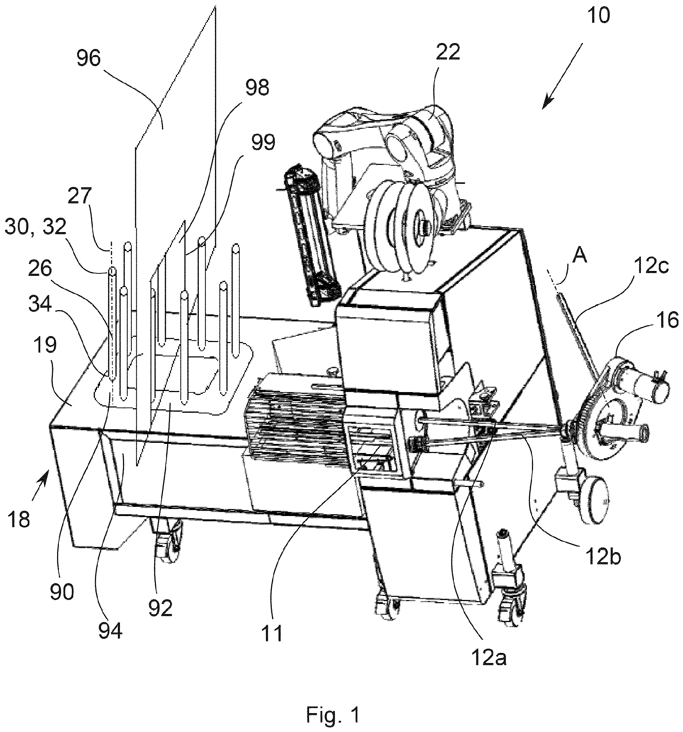

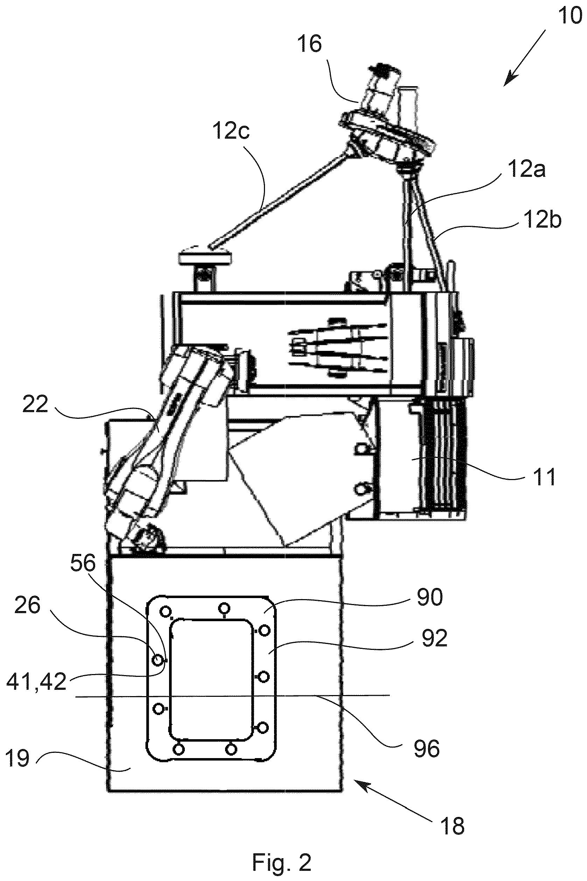

In Figs. 1 to 2, a first embodiment of a production machine, in particular a clipping machine 10 for preferably continuously producing sausage-shaped products, in particular sausages, is shown. A filling tube 12a is arranged upstream of clipping machine 10 with respect to a feeding direction F, wherein filling tube 12a extending along a central axis A and being made of a suitable material, like stainless steel.

Filling tube 12a arranged in an active or operating position which is a filling position, is attached to a filling tube assembly 16 which holds several filling tubes 12, in the shown embodiment in total three filling tubes 12a, 12b, 12c. In the embodiment shown in Fig. 1, filling tubes 12b, 12c are each in a passive position or non-working position, in which they can be loaded with new tubular-shaped packaging casings. This is particularly possible in the position represented by filling tube 12c in Fig. 1. In the position represented by filling tube 12b in Fig. 1, a casing brake assembly CB required for the production process can be pushed onto filling tube 12b. By means of filling tube assembly 16, filling tubes 12a, 12b, 12c can be moved by rotation of filling tube assembly 16 from their respective passive positions to the working position represented by filling tube 12a in Fig. 1.

Revolver filling tube assembly 16 is arranged directly or indirectly at an outlet of a filling unit (not shown) that feeds the filling material, wherein filling tube assembly 16 has two ports to connect each to one filling tube 12. Filling tube assembly 16 is configured in such a way, that filling tubes 12 may be positioned in an active position and a passive position by a rotation of filling tube assembly 16 around central axis A, wherein in the active position filling tube 12 is fluidically connected to the filling unit and in the passive position filling tube 12 is fluidically disconnected to the filling unit. In the passive position, filling tube 12 can be assembled and dissembled from filling tube assembly 16, and a packaging casing 14 may be arranged at filling tube 12. For cleaning reason and product changes different filling tubes 12 must be assembled at clipping machine 10. Further packaging casing 14 stored on the filling tube 12 is finitely, so in regular time periods new packaging casings 14 must be provided.

Clipping machine 10 comprises a magazine 18, wherein magazine 18 is arranged at a table 19. Magazine 18 comprises a conveyor 90 for holding mandrels 26, wherein the conveyor 90 conveys the at least one mandrel 26 from a production position to a loading position. Conveyor 90 is a circulating conveyor belt 92 driven by a motor 94, wherein conveyor belt 92 is arranged in an oval configuration.

The production position and the loading position of conveyor 90 is separated by a separating wall 96, wherein separating wall 96 includes at least one window 98 for passing conveyor 90 including the at least one mandrel 26.

Separating wall 96 includes at least one sensor 99 to monitor the at least one window 98 of separating wall 96 for unexpected movements such as a hand of an operator. The at least one sensor 99 is switched off while a mandrel 26 is passing window 98 of separating wall 99.

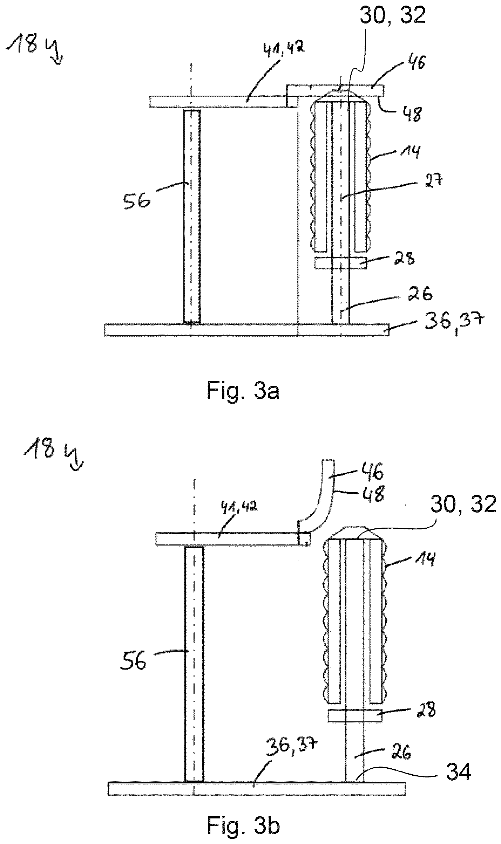

A tubular packaging casing 14 made of a thin sheet material is stored in a shirred form, like a concertina (cf. Figs. 3a, 3b), on filling tube 12a. The front end of packaging casing 14 facing in feeding direction F is closed by at least one closing means, such as a closure clip, by, for example, a clipping device 11. A feeding pump of a filling unit or filler (not shown) is feeding the filling material into packaging casing 14 while the feeding pressure of the filling material is pulling packaging casing 14 off from filling tube 12a. Gathering means of clipping unit 10 form a plait-like portion of filled packaging casing 14 which is at least approximately free from filling material. Clipping unit 10 then places and closes at least one closure clip at the plait-like portion forming the rear end of the sausage-shaped product just produced, i.e. the end pointing against the feeding direction F.

Robot 22 grasps a packaging casing 14 and moves it from magazine 18 to filling tube 12c, wherein packaging casing 14 is slid on filling tube 12c arranged at filling tube assembly 16. By rotating filling tube assembly 16, filling tube 12c can be brought from the passive position in the active position, the filling process can be continued with the packaging casing 14. It is advantageous if filling tube 12c is loaded with a new packaging casing 14 while filling tube 12a can be operated.

In Figs. 3a and 3b, one mandrel 26 with one packaging casing 14 is shown, wherein in Fig. 3a retaining element 46 is in a first section or position in which it releases free end 32 of mandrel 26 and wherein in Fig. 3b retaining element 46 is in second section or position in which the free end 32 of mandrel 26 is capped by retaining element 46. In second section or position, packaging casing 14 is secured by retaining element 46. In first section or position, packaging casing 14 can be removed from mandrel 26.

Retaining element 46 comprises a retaining surface 48 facing packaging casing 14. In second section or position, retaining surface 48 is substantially perpendicular to mandrel axis 27. Retaining element 46 is made of a material which is flexible, especially in a joint area. The retaining element 46 is formed by a flexible lip that is reversibly movable between the first section or position and the second section or position, wherein the retaining element 46 is arranged at holding means 42, in particular at a second plate 41, in such a way, that retaining element 46 urges by its own in the second section or position. Retaining element 46 comprises material that is suitable for a plurality of reversible deformations, like rubber or elastomers.

Furthermore, mandrels 26 may be provided with a sensor unit SU in the region of second mandrel end 34. Said sensor unit SU may detect the presence or absence of tubular packaging casing 14 on mandrel 26, and particularly on a receiving mandrel 26 that is positioned in a provision position in which packaging casing 14 is to be picked up. Thereby, it may be ensured that tubular packaging casing 14 is hold ready in the provision position, for being grasped by robot 22, when in the take-up position. Sensor unit SU may include a respective sensor element, like a weight sensor or an optical sensor. Alternatively, sensor unit SU may also be provided on clipping machine 10 in close vicinity to the provision position.

### List of reference signs

- 10: clipping machine
- 11: clamping device
- 12: filling tube
- 14: packaging casing
- 16: filling tube assembly
- 18: magazine
- 19: table
- 22: robot
- 26: mandrel
- 27: mandrel axis
- 28: support element
- 30: first mandrel end
- 32: free end of mandrel
- 34: second mandrel end
- 36: mandrel carrier means
- 37: first plate
- 41: second plate
- 42: holding means
- 46: retaining element
- 48: retaining surface
- 56: shaft
- 76: first diameter of first plate
- 78: second diameter of second plate
- 90: conveyor
- 92: conveyor belt
- 94: motor
- 96: separating wall
- 98: window
- 99: sensor
- A: central axis
- SU: sensor unit

## Claims

1. A magazine (18) for providing at least one tubular-shaped packaging casing (14) suitable for receiving a flowable filling material in the production of sausage-shaped products, in particular sausages, comprising:
- at least one mandrel (26) for holding at least one packaging casing (14), wherein the at least one mandrel (26) has a longitudinal mandrel axis (27), and wherein the at least one mandrel (26) comprises a free end (32) at a first mandrel end (30), and
- a conveyor (90) for holding at least one mandrel (26) in an upright position, wherein the conveyor (90) conveys the at least one mandrel (26) from a loading position to a delivery position.

2. The magazine (18) according to claim 1,
wherein at least one retaining element (46) is provided wherein the retaining element (46) is arranged at least at the proximity of the first mandrel end (30) for releasably retaining the packaging casing (14) on the at least one mandrel (26).

3. The magazine (18) according to claim 2,
wherein the at least one retaining element (46) has at least one first section in which it releases the free end (32) of the at least one mandrel (26) and at least one second section in which the free end (32) of the at least one mandrel (26) is capped by the at least one retaining element (46).

4. The magazine (18) according to claim 2 or 3,
wherein the at least one retaining element (46) is made of a material which is elastic at least in sections.

5. The magazine (18) according to any of the preceding claims,
wherein the longitudinal mandrel axis (27) is oriented at least approximately vertically or forms an acute angle with the vertical line.

6. The magazine (18) according to any of the preceding claims,
wherein the conveyor (90) is a circulating conveyor belt (92) driven by a motor (94), wherein the conveyor belt (92) is preferably arranged in an oval configuration.

7. The magazine (18) according to any of the preceding claims,
wherein the at least one mandrel (26) has a second mandrel end (34) spaced apart from the first mandrel end (30) along the longitudinal mandrel axis (27) and is attached to a respective mandrel carrier means (36) positioned on the conveyer (90).

8. The magazine (18) according to any of the preceding claims,
wherein the at least one mandrel (26) comprises at least one support element (28) for supporting the packaging casing (14), the at least one support element (28) is preferably reversibly adjustable in its position along the mandrel (26).

9. The magazine (18) according to any of the preceding claims,
wherein the conveyor (90) is inclined in its longitudinal axis.

10. The magazine (18) according to any of claims 7 to 9 when dependent on claim 2,
wherein the at least one retaining element (46) is held by holding means (42) coupled by a shaft (56) to the mandrel carrier means (36) for supporting the holding means (42) and transmitting forces from the mandrel carrier means (36) to the holding means (46).

11. The magazine (18) according to claim 10,
wherein the carrier means (36) are holding the mandrel (26), the shaft (56) and the holding means (46).

12. A production system (10), in particular a clipping machine (10), for filling and closing a tubular or bag-shaped packaging casing (14) to produce sausage-shaped products, in particular sausages, comprising:
- at least one magazine (18) according to any of claims 1 to 11, and
- a robot (22) to pick-up a packaging casing (14) provided at the magazine (18) and to place it at a filling unit.

13. The system (10) according to claim 12,
wherein the loading position and the delivery position of the conveyor (90) is separated by a separating wall (96), wherein the separating wall (96) includes at least one window (98) for passing the conveyor (90) including the at least one mandrel (26).

14. The system (10) according to claim 12 or 13,
wherein the separating wall (96) includes at least one sensor (99) to monitor the at least one window (98) of the separating wall (96) for unexpected movements such as a hand of an operator.

15. The system (10) according to any of claims 12 to 14,
wherein the at least one sensor (99) is switched off while a mandrel (26) is passing the window (98) of the separating wall (99).
